# EUROPEAN PATENT SPECIFICATION

(11) **EP 1 402 702 B1**
(45) Date of publication and mention of the grant of the patent: **01.04.2009**
(21) Application number: 02739889.0
(22) Date of filing: 13.06.2002
(51) Int. Cl.: H04L 29/06, H04L 12/18, H04L 12/58

(54) **WEB-ENABLED TWO-WAY REMOTE MESSAGING FACILITY**
WEB BASIERENDE ZWEIWEGNACHRICHTENFERNEINRICHTUNG
FONCTION DE MESSAGERIE BIDIRECTIONNELLE A DISTANCE VIA LE WEB

(30) Priority: 20.06.2001 US 884122
(43) Date of publication of application: 31.03.2004
(73) Proprietor: Intel Corporation, Santa Clara, CA 95052 (US)
(72) Inventor: SHIRES, Glen, Danville, CA 94526 (US); ZHUANG, David, San Mateo, CA 94403 (US)
(74) Representative: Beresford, Keith Denis Lewis
(86) International application number: PCT/US2002/018959
(87) International publication number: WO 2003/001767

(56) References cited:
- EP-A- 1 083 686
- EP-A- 1 107 541
- WO-A-01/13259
- WO-A-99/48011
- US-A- 6 020 884
- JONES G ET AL: "Web-based messaging management using Java servlets" INTEGRATED NETWORK MANAGEMENT. DISTRIBUTED MANAGEMENT FOR THE NETWORKED MILLENIUM. PROCEEDINGS OF THE IFIP/IEEE INTERNATIONAL SYMPOSIUM ON INTEGRATED NETWORK MANAGEMENT. PROCEEDINGS OF IM. IFIP/IEE INTERNATIONAL SYMPOSIUM ON INTEGRATED NETWORK MANAGE, 1999, pages 19-33, XP002166299

## Description

### Reservation of Copyright

This patent document contains information subject to copyright protection. The copyright owner has no objection to the facsimile reproduction by anyone of the patent document or the patent, as it appears in the U.S. Patent and Trademark Office files or records but otherwise reserves all copyright rights whatsoever.

### BACKGROUND

Aspects of the present invention relate to World Wide Web. Other aspects of the present invention relate to messaging via World Wide Web.

The platform of web based distributed computing has been widely adopted in applications such as web based communications. Many web based communication applications have been developed in such a way that the applications can take advantage of existing web technologies. For example, HyperText Transport Protocol (HTTP) has been used to send messages across the web. While existing web technologies have led to speedy development of web applications, they simultaneously create obstacles in developing flexible web based communication applications that support more complicated and demanding features such as receiving real-time notification from server components.

HTTP is a data transport protocol developed based on a simple client/server interaction model or a request-response model. In HTTP, a client always initiates requests and responses are generated with respect to the requests by the server and then returned to the client. Some web applications leverage HTTP as an underlying transport protocol. A known problem associated with this model is that it is difficult for a server entity to notify its clients of any event (e.g., status changes) occurred on the server. For example, it is difficult for a server component to initiate a message to its web clients using HTTP. This drawback has inherently limited the capability of the web applications that employ the model. It becomes particularly problematic in applications in which the ability to receive real-time notification from a server may be crucial.

There are other known mechanisms that provide web-based instant notification. One type of such mechanisms includes online instant messaging or online chatting. Mechanisms in this category rely on proprietary protocols and deliver mechanisms, both of which can not be easily incorporated into web-based enterprise applications. A different category of mechanism includes various remote messaging mechanism such as Remote Procedure Call (PRC), Common Object Request Broker (CORBA) architecture, JAVA Remote Method Invocation (RMI), and Java Messaging Service (JMS). Since the mechanisms in this category are initially designed for client/server applications, although efforts are made to utilize them in web environment, such efforts have so far proven to be difficult due to reasons such as restrictions imposed by firewalls and the highly distributed and multi-platform nature of the Internet. US 6020884 discloses a system and method for integrating an online service community with a foreign service such as the Internet World Wide Web. A toolbar is presented to a viewer as part of the user's web browser. By interacting with the control buttons of the toolbar and the menus of the viewer, online service content is delivered to the user in response to URLs specified by the user as he or she browses the web. The control buttons also provide opportunities for interacting with other community members. Although a user may change URLs and website addresses frequently the system maintains a context via a persistent connection between the community server at the online service and a community client on the user's computer.
WO 01/13259 discloses a further system for integrating a personal web platform service with a web based multidirectional focal point for a user's communications. Users interact with the service on different levels with a service providing a virtual network for individuals with a unique global identifier.
WO 99/48011 discloses a computer system that provides an integrated combination of threaded instant messages, open display bulletin boards, private bulletin boards, threaded email, explicit acknowledgment of messages and conferencing modes. The system is implemented via a computer network and includes server application, a client application and a data repository maintained by the server. The server records in the data repository pertinent information regarding communications between and requests issued by users and handles communications in accordance with a system mode being exercised (e.g. talk, conferencing, mail, messaging etc).

### BRIEF DESCRIPTION OF THE DRAWINGS

The present invention is further described in terms of exemplary embodiments which will be described in detail with reference to the drawings. These embodiments are non-limiting exemplary embodiments, in which like reference numerals represent similar parts throughout the several views of the drawings, and wherein:

Fig. 1 is the architecture of embodiments of the present invention;

Fig. 2 depicts a mechanism for 2-way messaging between a web client and an event producer;

Fig. 3 depicts a high level functional block diagram of an RMF web client, in relation to a web client and a web server;

Fig. 4 depicts a high level functional block diagram of an RMF server, in relation to a web server and an event producer;

Fig. 5 illustrates the relationships among web clients, channels, listener agents, and slots in a message board;

Fig. 6 describes exemplary schematics of a process, in which a remote messaging session is established based on a web client's request;

Fig. 7 describes exemplary schematics of a process, in which a web client subscribes an event with the RMF server via a RMF web client;

Fig. 8 describes exemplary schematics of a process, in which a web client requests an RMF server to listen to a subscribed event;

Fig. 9 describes exemplary schematics of a process, in which an event producer publishes data on a message board;

Fig. 10 is an exemplary flowchart of a process, in which a web-enabled 2-way messaging communication is facilitated by the present invention;

Fig. 11 is an exemplary flowchart of a process, in which an RMF web client facilitates a web client in web-enabled 2-way messaging communication;

Fig. 12 is an exemplary flowchart of a process, in which an RMF server interacts with an RMF web client and event producers to facilitate a web-enabled 2-way messaging communication; and

Fig. 13 is an exemplary flowchart of a process, in which an event producer interacts with an RMF server.

### DETAILED DESCRIPTION

The invention is described below, with reference to detailed illustrative embodiments. It will be apparent that the invention to be embodied in a wide variety of forms, some of which may be quite different from those of the disclosed embodiments. Consequently, the specific structural and functional detail is disclosed herein are merely representative and do not limit the scope of the invention.

The processing described below may be performed by a general-purpose computer alone or in connection with a special purpose computer. Such processing may be performed by a single platform or by a distributed processing platform. In addition, such processing and functionality can be implemented in the form of special purpose hardware or in the form of software being run by a general-purpose computer. Any data handled in such processing or created as a result of such processing can be stored in any memory as is conventional in the art. By way of example, such data may be stored in a temporary memory, such as in the RAM of a given computer system or subsystem. In addition, or in the alternative, such data may be stored in longer-term storage devices, for example, magnetic disks, rewritable optical disks, and so on. For purposes of the disclosure herein, a computer-readable media may comprise any form of data storage mechanism, including such existing memory technologies as well as hardware or circuit representations of such structures and of such data.

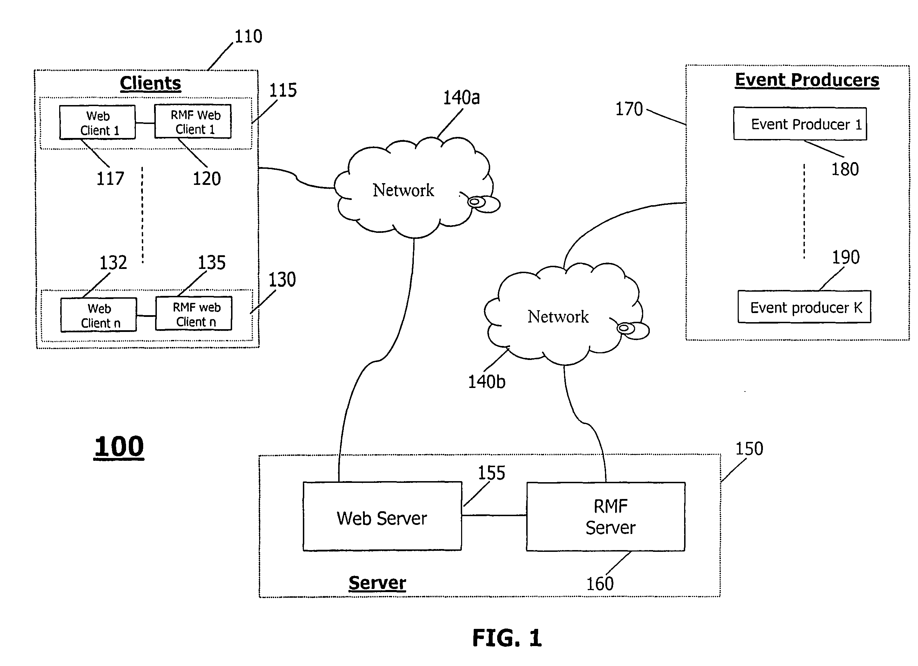

Fig. 1 is an architecture of embodiments of the present invention and the environment in which it operates. A web-enabled 2-way remote messaging mechanism 100 shown in Fig. 1 comprises clients 110, a server 150, and event producers 170, wherein the communication between the clients 110 and the server 150 is via a network 140a and the communication between the server 150 and the event producers 170 is via a network 140b. Network 140a may in general represent a communication network which may include a Local Area Network (LAN), a Wide Area Network (WAN), the Internet, and intranet, or any other types of proprietary networks. Network 140b may correspond to, besides the possibilities mentioned above, an internal network. In implementation, network 140a and network 140b may also correspond to the same network.

In the web-enabled 2-way remote messaging mechanism 100, the clients 110 and the event producers 170 communicate via a web-enabled 2-way remote messaging mechanism facilitated by the server 150. The clients 110 includes one or more web clients 117,.., 132, each of which is connected to a Remote Messaging Facility (RMF) client (120,.., 135). The server 150 comprises a web server 155 and a Remote Messaging Facility (RMF) server 160. The event producers 170 includes one or more event producers 180,.., 190.

In the 2-way remote messaging mechanism 100 shown in Fig. 1, a web client (e.g., web client 1, 117) and an event producer (e.g., event producer 1, 180) communicate through the corresponding RMF web client 115, the web server 155, and the RMF server 160. The remote messaging mechanism 100 in Fig. 1 is subscription based. For example, the event producer 180 may publish data in the RMF server 160. The web client 120 may subscribe for an event related to the data publication from the event producer 180 with the RMF server 160. The subscription from a web client may be placed through its corresponding RMF web client. The RMF server 160, once accepts the subscription, may monitor the event and notify an appropriate RMF web client through which the event is then dispatched to the web client that subscribes the event.

In the mechanism 100 shown in Fig. 1, on the client side, each web client communicates with the server 150 via its corresponding RMF web client. Such communication includes sending requests and receiving responses. For instance, web client 117 may send a request to subscribe for an event with the RMF server 160 through its RMF web client 120. The RMF web client 120 may encode the request based on a web protocol prior to transporting it to the web server 155. For example, the RMF web client 120 may encode the request using the HyperText Transport Protocol (HTTP). A web client may interface with an RMF web client via a well defined Application Programming Interface (API) provided by the RMF web client.

On the server side, the RMF server 160 facilitates the communication with a RMF web client via the web server 155. For example, the RMF server 160 may send an event to web client 117 as an response to the web client's request to listen to a subscribed event. The event may be encoded, prior to being sent to the client using HTTP through the web server 155. Using an existing web protocol allows the remote messaging mechanism 100 to be deployed in an existing web environment. For example, by encoding requests and responses using HTTP POST and HTTP Response, respectively, the remote messaging mechanism 100 can be incorporated into existing web applications.

An event producer may interact with a web client through the RMF server 160. For example, it may post data in the RMF server 160. It may also update the existing data in the RMF server 160. The interaction between an event producer and the RMF server 160 may be through an RMF server API.

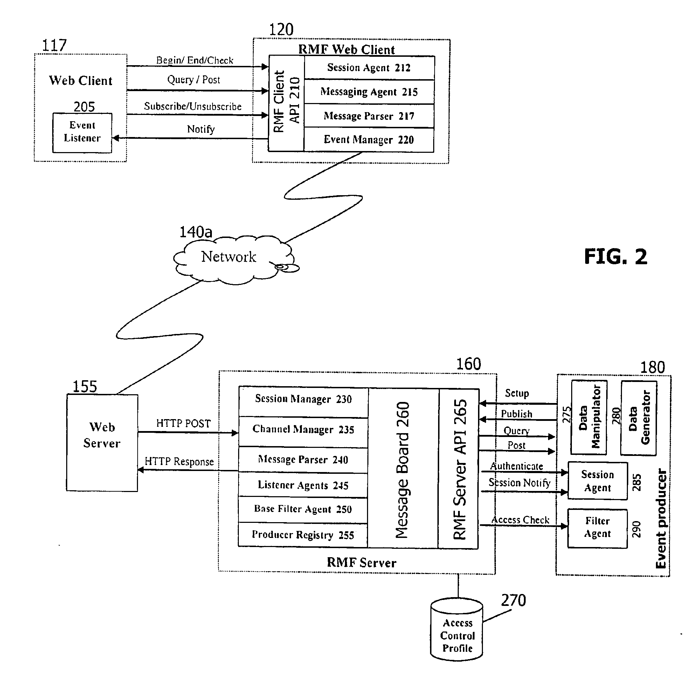

Fig. 2 depicts the internal structure of the remote messaging mechanism 100 in accordance with the present invention. The internal structure of mechanism 100 shown in Fig. 2 is illustrated using a single web client and a single event producer. In Fig. 2, the web client 117 and the event producer 180 are connected for 2-way remote messaging. The web client 117 connects to the corresponding RMF web client 120 that communicates with the web server 155 via network 140a. The RMF server 160 connects to both the web server 155 and the event producer 180. Interfacing with the web server 155, the RMF server 160 communicates with the web client 117 across the network 140a through the RMF web client 120.

In Fig. 2, the RMF web client 120 comprises an RMF client API 210, a session agent 212, a messaging agent 215, a message parser 217, and an event manager 220. The web client 117 interfaces with the RMF web client 120 through the RMF client API 210. The interface may allow the web client 117 to request to establish remote messaging sessions, to subscribe events, to receive notification, and to query information. The RMF client API 210 may also facilitate filtering operations performed on the received events using event masks. Furthermore, it may provide methods to query the content stored on the RMF server 160. In Appendix A, an exemplary RMF client API is incorporated as part of the present invention.

The session agent 212 is the main controller in the RMF web client 120 and is responsible for establishing and maintaining a session with the RMF server 160. The session agent 212 may also initiate a listening connection with the RMF server 160 to listen to a subscribed event. The messaging agent 215 facilitates the communication between the RMF web client 120 and the RMF server 160. For example, the messaging agent 215 may send requests to the RMF server 160 and process responses received from the RMF server 160. The message parser 217 parses the responses received from the RMF server 160.

The event manager 220 manages client side event subscription and dispatches an event to the web client 117 when the event is received. The event manager 217 may also maintain a queue when received events accumulate. The accumulation may be due to that some of the events can not be promptly delivered.

In the illustrated embodiments shown in Fig. 2, the web client 117 interacts with RMF server 160 through the RMF web client 120. For example, the web client may send a request through the RMF web client 120 to establish a remote messaging session with the RMF server 160. Such a session may be ended by the web client by sending an end session request through the RMF web client. During a remote messaging session, the web client 117 may subscribe for an event with the RMF server 160 through the RMF web client 120. The web client 117 may also unsubscribe a subscribed event by sending a unsubscribe request. Requests from the web client to the RMF server 160 may be sent as a HTTP POST message.

When a subscribed event occurs, the event may be sent, in the form of, for example, an HTTP response, from the RMF server 160 to the web client 117 via the RMF web client. The received response may be processed (by the messaging agent) and parsed (by the message parser) before the event manager 220 dispatches a notification to the web client to inform the arrival of the event.

The web client may also perform remote message query via the RMF web client 120. For example, the web client 117 may send a query request via the RMF web client to the RMF server 160 to examine the status of certain data. The return message may also be sent in the form of a response encoded using HTTP protocol. The web client 117 may also post a message, via the RMF web client 120, at the RMF server 160 for a particular event producer.

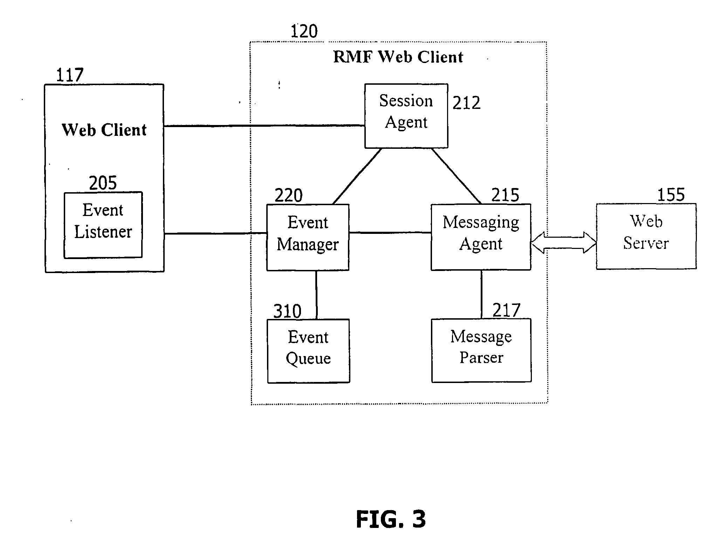

Fig. 3 shows how different parts of the web client 117 and the RMF web client 120 interact. The session agent 212 receives requests from the web client 117 and sends the request to the web server 155 through the messaging agent 215. When the messaging agent 215 receives a response from the web server 155, it connects with the message parser 217 to parse the response. If the response is an event, the messaging agent 215 sends the parsed event to the event manager 220. The event manager 220 then dispatches the parsed event to an event listener 205 in the web client. If the response is not an event, the parsed message is sent to the session agent 212 which is then dispatched to the web client 117.

The event manager 220 may be associated with an event queue 310 that stores the received events that are to be dispatched. The event queue 310 may be implemented as a queue which dispatches queued events in an First In First Out (FIFO) order. It may also be implemented as a stack that dispatches the event that is received the last. The implementation strategy may depend on the web application that is running as a web client.

In the embodiments illustrated in Fig. 2, the web server 155 intercepts all the requests sent from the RMF web client 120 and forwards the requests to the RMF server 160. The forwarded requests may be encoded in a web protocol such as HTTP. For example, a request to start a remote messaging session may be encoded in the form of an HTTP POST protocol and sent to the RMF server 160. Any response, generated by the RMF server 160 based on a request, is returned to the web client that makes the request. For example, when a remote messaging session is established according to a request from the web client to begin a session, the RMF server 160 may generate a response that contains the session ID after the requested session is established. Such a response may be encoded by the web server as an HTTP response and forwarded to the web client.

In Fig. 2, the RMF server 160 handles requests from the web clients, listens for events that are subscribed by web clients with respect to the message board objects, and multicasts the events to appropriate clients according to their subscriptions. The RMF server 160 may operate as an extension to the web server 155 as a servlet if the web server 155 supports serlet. The RMF server 160 may also operate as a stand-alone server connected to the web server 155 through a well-defined interface. For example, a stand-alone RMF server may interact with a web server through a Common Gateway Interface (CGI).

In Fig. 2, the RMF server 160 comprises a session manager 230, a channel manager 235, a message parser 240, one or more listener agent 245, a based filer agent 250, a producer registry 255, a message board 260, and an RMF server API 265, and an access control profile 270. The event producer 180 interfaces with the RMF server 160 through the RMF server API 265. The interface may allow the event producer 180 to register itself in the producer registry 255 and to publish data in the message board 260. Through the RMF server API 265, the RMF server 160 may also request the event producer 180 to authenticate a web client and to filter certain events. In Appendix B, an exemplary RMF server API is incorporated as part of the present invention.

The session manager 230 coordinates the interaction between the RMF server 160 and both the RMF web client 120 and the event producer 180. The session manager 230 controls RMF sessions and manages the overall process of request processing. An RMF_session may be considered as a trusted relationship between an RMF client and its server. Each session contains a unique session ID so that its client may be easily identified.

In Fig. 2, the web client 117 may request the RMF server 160 to establish a remote messaging session, during which the web client may subscribe (or unsubscribe) for an event with the RMF server 160, listen to a subscribed event, query data items stored in the message board 260, and post messages to the message board 260. Sessions may be initiated by the web client and may be terminated by either the web client 117 or the RMF server 160. The session manager 230 facilitates 2-way remote messaging by maintaining such a session.

A session may be authenticated during an initial establishment. In this case, the session manager 230 may perform authentication through a session agent 285 located in the event producer 180. A session may also be established with anonymous client identification. In this case, the authentication may not be performed. Whether authentication is necessary may depend on the access policy stored in an access control profile 270 in the RMF server 160.

In addition to managing remote messaging sessions, the session manager 230 may also maintain, based on a request from the web client 117, a persistent listening connection for the corresponding web client. Such a connection may be dedicated for pushing events from the server to the client. An event connection may have the capability of multiplexing event subscriptions. In normal situations, the session manager 230 may establish a listening connection for a client as soon as there is a successful event subscription. In other situations, the session manager 230 may also set up a listening connection based on a client's request. The session manager 230 may close a listening connection when there is no longer any outstanding subscription.

The session manager 230 may also terminate a remote messaging session based on a request issued by either the web client 117 or by its own initiation. Either a web client or the RMF server may issue such a request.

The channel manager 235 manages event-related matters such as event subscription or event un-subscription. It may associate each remote messaging session (with successful event subscription) with a dedicated channel to host subscribed events. The channel manager 235 may also perform access control, prior to a channel is established for a client, based on the current access policy setting (which may be stored in the access control profile 270). A channel may be implemented as an encapsulation of a FIFO queue with a thread to push events. To monitor subscribed events, a channel is also connected to the message board 260 through one or more listener agents 245.

A listener agent 245 may be dedicated to a single slot (will be discussed later) in the message board 260. It receives events from its dedicated slot and forwards events to appropriate channels. In doing so, a listener agent 245 may aggregate event subscriptions from different web clients.

When a client subscribes for an event associated with a slot, the listener agent 245 is connected to the channel that is dedicated to the client. The listener agent 245 is responsible to listen to the subscribed event occurred in the slot. For example, assume a web client (e.g., 117) subscribes for an event related to the insertion operation performed on a specific slot in the message board 260. A channel may then be dedicated to the web client 117. The web client may be responsible to initiate a listening connection for this event. Once the listening connection is established, the listener agent associated with the specific slot is linked to the channel dedicated to the web client 117. Whenever an event producer performs an insertion operation on the slot, the listener agent receives an instance of the subscribed event.

Prior to sending an event to the connected channel, the listener agent 245 may check with a base filter agent 250 to perform certain filtering operation for access control purposes. It may also further check with a filter agent 290 within an event producer (e.g., 180) to perform dynamic event filtering. The filtered event is then sent from the listener agent 245 to the channel dedicated to the client that subscribes the event. At this point, the channel manger 235 dispatches the event to an appropriate web client.

The message parser 240 plays a similar role as its counterpart on client side except that the message parser 240 on the server side is dedicated to parse clients' requests.

In Fig. 2, the message board 260 provides a mechanism for information sharing. The event producers 170 may utilize the message board 260 to communicate with web clients or with each other. For example, the event producers 180 may post shared data on the message board 260. To share data among different parties, a sharing-by-reference scheme may be adopted in the message board 260. In such a scheme, each sharing party may hold a reference to a piece of data that may be stored at some central location.

The message board 260 may facilitate sharing of data in different structures. For example, data can be a simple data item or can be a collection of data items. The message board 260 supports a collection of data items organized as, for example, a table, a queue, a list, an array, or a stack. The message board 260 may also be designed so that it supports customized structures.

To host shared data, the message board 260 may provide a plurality of data hosting elements called slots. A slot is a holder or an organizer for some shared data and may be indexed using a unique identification. To facilitate different structures of shared data, the message board 260 may support different types of slots that correspond to various structures. For example, a simple slot may be used to host a single data item and a table slot may be used to host a plurality of data items organized as a table.

The differences among different types of slots may be related to how the data is organized, manipulated, and retrieved. For example, a table slot allows applications to access a data item using a unique name. Data items in an array slot or a list slot can both be accessed using an integer index. An array slot has a fix length while a list slot may not. A list slot also allows an application to insert data item at any arbitrary position in the list. In addition, both a queue slot and a stack slot impose an access order on their data items. For instance, the access order in a queue slot is FIFO while the access order in a stack slot supports Last In First Out (LIFO) order.

In a sharing-by-reference scheme, a data item stored in a slot may contain a unique reference to the shared data. Such a shared data item may also contain some additional information about the shared data such as a timestamp and a description of the data item.

The message board 260 may also send event notification to interested parties. To support such function, the message board 260 may contain an appropriate mechanism to generate events and to send out notification. The message board 260 may send out notification in different situations. One type of situations is associated with slot activities. Such activities include that a slot is created or that a slot is deleted. An event related to a slot activity is called a slot event. A different type of situations is associated with data manipulation activities. For example, a piece of data is initially posted (published) in, deleted from, or updated in a slot. An event related to a data manipulation activity is a data event.

To receive events, an event listener may be registered with the message board 260 along with an event name. A listener may be associated with more than one event types. For example, a listener gent may be registered to listen to an insertion data event on a slot. Events may be sent out synchronously or asynchronously, depending on the particular setting of a slot. A default mode may be set as synchronous. A slot event may be SLOT_CREATED, SLOT_CLEARED or SLOT_DELETED. Slot events only specify the slot name associated with an event. A data event may be DATA_POSTED, DATA_CHANGED or DATA_DELETED. This category of events (data event) may be registered with both a slot name and a data item reference.

In addition to allowing an event producer to publish data and to send event notification, the message board 260 may also allow an event producer to publish a message handler that provides a handle for other event producers or web clients to send messages to it. Each message posted to a message handler may result in a response as an answer. A slot may contain a set of message handler registered by some event producers. Each message handler is uniquely named with a message name within the slot. Duplicate registration may not be allowed.

A message handler may be defined with respect to also a list of parameters. When an event producer invokes a message handler, such parameters may need to be instantiated. A response may be given in the form of a data item, which may contain some returned value, data source and a description. An event producer may post a request synchronously or asynchronously. In an asynchronous mode, the request may be posted with a response listener so that it can listen to the answer. Such a built-in question and answer mechanism, together with data hosting and notification mechanisms, allows the message board 260 to perform dynamic information exchange. To facilitate the interaction with event producers, the message board 260 may provide APIs. In Appendix C, an exemplary message board API is incorporated as part of the present invention.

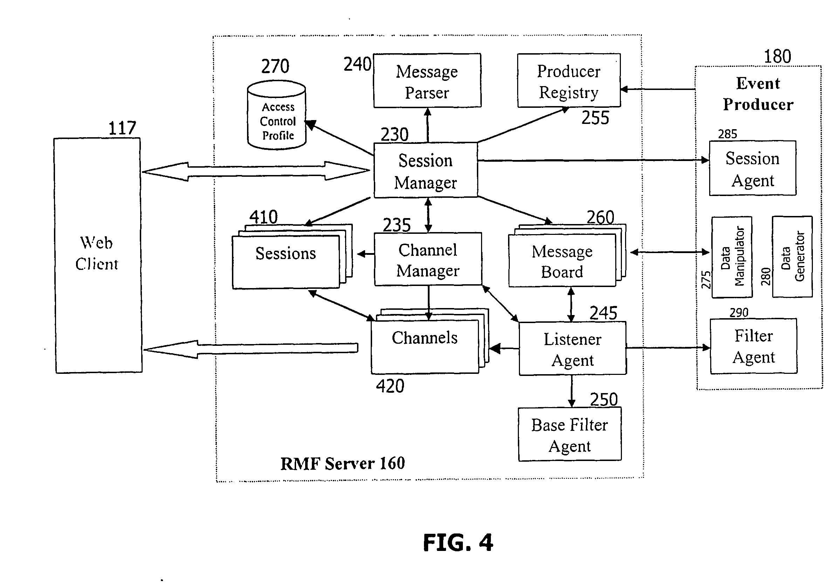

Fig. 4 depicts a high level functional block diagram of an RMF server which shows how different parts of the RMF server 160 interact. In Fig. 4, the session manager 230 receives and processes the requests from the web client 117. Request processing may include invoking the message parser 240 to parse the requests. If a request corresponds to establish a remote messaging session between the web client 117 and the event producer 180, the session manager 230 may first authenticate the web client 117 through the session agent 285 located in the event producer 180. If the authentication is successful, the session manager 230 establishes a session 410 and notifies the session agent 285 of the event producer 180 that a session with the web client 117 is running.

When a request is to subscribe for an event with the RMF server 160, the session manager 230 examines the access permission for the web client 117 to access the slot (associated with the subscribed event) using the access control profile 270. A channel is assigned to the session (established between the web client 117 and the event producer 180) and a listener agent 245 associated with the requested slot is linked to the channel. The subscription may also specify a filtering operation to be performed on any detected event. The corresponding filter may be located in the base filter agent 250 or in the filter agent 290 located in the event producer 180.

At the same time, the session manager 230 may establish and maintain a listening connection through which the subscribed event may be continuously monitored and sent back to the web client 117. An observed event may be filtered, through either the base filter agent 250 or the filter agent 290, and added to the channel assigned to the web client 117. The channel manager 235 then dispatches the event to the web client 117.

In Fig. 4, the session agent 285 may be registered with the RMF server 160 (by the event producer 180) for user authentication and session control purposes. In this way, the RMF server 160 does not impose any specific authentication requirement on its clients. There may be other alternative ways to perform authentication. For example, it may be performed by the web server 155 or by an operation system.

Web applications may leverage the facilities built into the web-enabled 2-way remote messaging mechanism 100 to safeguard their information. These facilities may include:

user authentication - an authentication scheme based on user name and password pair. Web applications can ensure an adequate level of security by integrating a robust security framework with the web-enabled 2-way remote messaging mechanism 100 through a security agent object,

server side access control - an authentication scheme in which the RMF server 160 enforces serve-side access control through filter agents. Security policies may be set up for a particular user or a user group, specifying which slots a client can access, what event the client can listen, or what message handler the client is allowed to invoke, or

read-only operations - a security measure which restricts a client to make any direct change to the data items stored at server side.

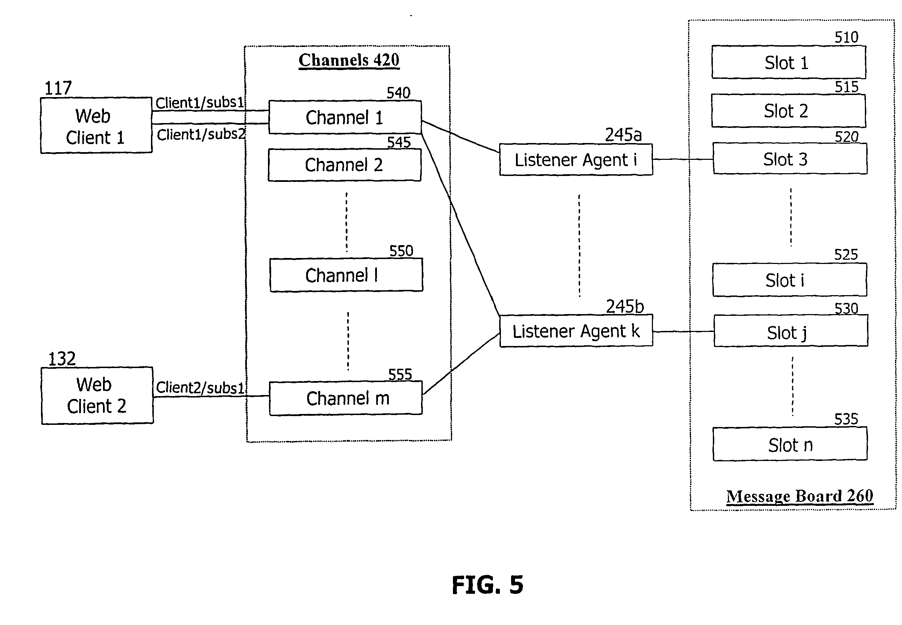

Fig. 5 illustrates the relationships among web clients, channels, listener agents, and the slots in the message board. As shown in Fig. 5, each listener agent is associated with a particular slot. For example, the listener agent i, 245a, is associated with slot 3, 520, and the listener agent k, 245b, is associated with slot j, 530, in the message board 260. In Fig. 5, a listener agent may be connected to a plurality of channels, each of which is interested in listening to an event related to the slot with which the listener agent is associated. For example, the listener agent k, 245b, is connected to both channel 1, 540, and channel m, 555.

Different channels connecting to a same listener agent may be interested in different events. For example, in Fig. 5, channel 1 (540) may be interested in a slot event related to any deletion of the slot j (530), while channel m (555) may be interested in a data event related to any insertion of data into the slot j (530). In this case, the listener agent 245b may monitor both types of event. When any of the events occurs, the listener agent 245b may perform appropriate filtering (different events may require different filtering operations) and send the event to an appropriate channel.

A channel may connect to different listener agents. For example, in Fig. 5, channel 1, 540, is connected to both listener agent 245a and 245b. Each channel is dedicated to a single client. For example, channel 540 in Fig. 5 is dedicated to web client 1, 117. A web client may subscribe events that are associated with different slots in the message board 260. In this case, corresponding different listener agents are linked to the same channel to simultaneously listen to the subscribed events.

To enable the communication between the RMF clients 110 and the RMF server 160, the web-enabled 2-way remote messaging mechanism 100 may employ a messaging model. Such a messaging model may comprise a plurality of commands corresponding to different requests and responses. The mechanism 100 employs the messaging model as RMF messaging protocol, which includes the following protocols:

BeginSession - this command corresponds to a request issued by a web client to initiate a new remote messaging session. A positive response to this request may comprise a unique session ID. Such a session ID may be used internally and strictly shared by only the RMF client and the RMF server,

EndSession - this command corresponds to a request to terminate an ongoing session issued by either a web client or a server entity. When a session is terminated, all outstanding event subscriptions may be cleared by both the client and the server. At the same time, any existing event listening connection between them may also be disconnected. In addition, any resource associated with this session may be released. If the request is issued by a web client, a response to this request from the server may be a simple acknowledgement. If the request is issued by a server, the web client may not be required to send a response,

CheckSession - this command corresponds to a request to check the current state of an ongoing session. The RMF server, in this case, may return a code to indicate the current state on the server side. Different code values may represent different states. For example, code 100 may indicate a normal state, code 200 may indicate that the underlying session exists but event connection is down. Code 300 may indicate that no such session exists,

SubscribeEvent - this command corresponds to a request to subscribe an event. The request may simultaneously inform the RMF server the client's intent to listen to the event from a specified slot with an event mask (may be provided with the request). If the subscription is successful, the server may return, as a response, a positive acknowledgment. Otherwise, the server may return an error code indicating an unsuccessful subscription. A successful subscription may not require the existence of the specified slot. A successful subscription may also cause the client to start an event listening request,

UnsubscribeEvent - this command corresponds to a request to cancel an existing subscription. If a subscription is cancelled successfully, the RMF server may simply send an acknowledgment. Otherwise, the server may send a return code to indicate an error condition. When the cancelled subscription is the last remaining with respect to a web client, the corresponding event listening connection, if any, may be disconnected simultaneously,

QueryData - this command corresponds to a request to fetch the current value of a named data item stored in a message slot. If the name of the data item is omitted, the slot is, by default, a simple slot. To successfully process the request, the pre-existence of the target slot and a proper permission may be required. An error code may be returned to indicate a situation otherwise,

ListenEvent - this command corresponds to a request to establish an event listening connection. In general, a client may not send a listen event request until there is at least one subscribed event for the client. A web client may also send a voluntary timeout or a request to end the current session. When the connection is disrupted due to a voluntary time-out or any other reason, the web client may have the responsibility to reestablish a new connection while the underlying session is still valid, and

PostMessage - this command corresponds to a request sent to a slot to invoke a message handler defined by an event producer. This request may be issued with a slot name, a message name that exists on the slot, and a list of parameters. To successfully process the request, the pre-existence of the target slot and the proper permission may be required. A positive response may include a data item. A message may be posted asynchronously. In this case, the response is sent through the session's event channel.

The commands described above may be transported over the network using an existing Internet protocol. For example, all requests may be transported from the initiating party (the web clients 110) to the web server 155 through HTTP POST. If the RMF server 160 is implemented as a servlet in the web server 155, the HTTP POST can directly reach the RMF server 160. In the situation where the RMF server 160 is implemented as a stand-alone server (e.g., if the web server 155 does not support servlet), the HTTP POST may be delivered to the RMF server 160 from the web server 155 through a special CGI extension.

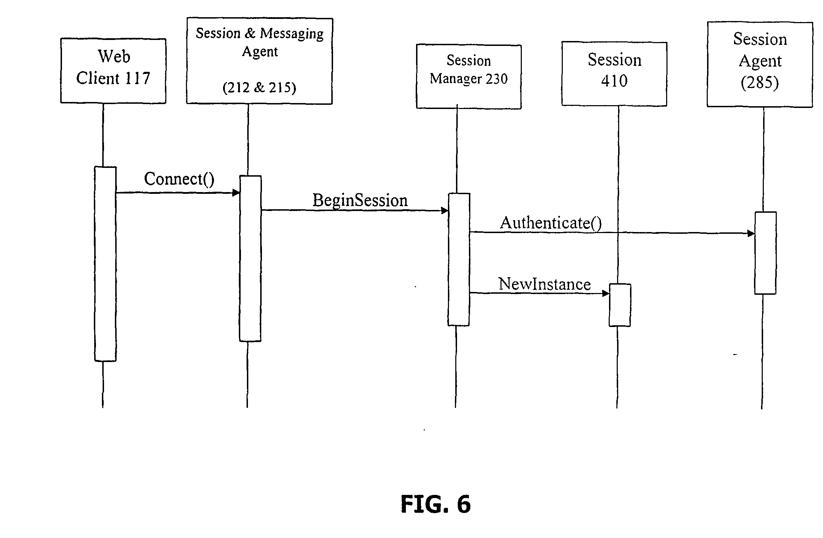

In Fig. 6 to Fig. 9, exemplary schematics of different processes, in which different parties in the web-enabled 2-way remote messaging mechanism 100 interact with each other to achieve 2-way remote messaging capabilities, are described. Fig. 6 describes exemplary schematics of a process, in which a remote messaging session is established based on a web client's request. In Fig. 6, the web client 117 sends a request to the session agent 212 located in the RMF web client 120 to start a session with the event producer 180. The messaging agent 215 encodes the BeginSession request (e.g., as HTTP POST) and sends it out to the RMF server 160.

The session manager 230, located in the RMF server 160, receives the BeginSession request and parses the request via the message parser 240. The request may specify an event producer with which the requested session is established. Based on the request, the session manager 230 informs the session agent 285, located in the specified event producer 180, to authenticate the web client. If the authentication is successful, the session manager 230 starts a remote messaging session 410 for the web client 117.

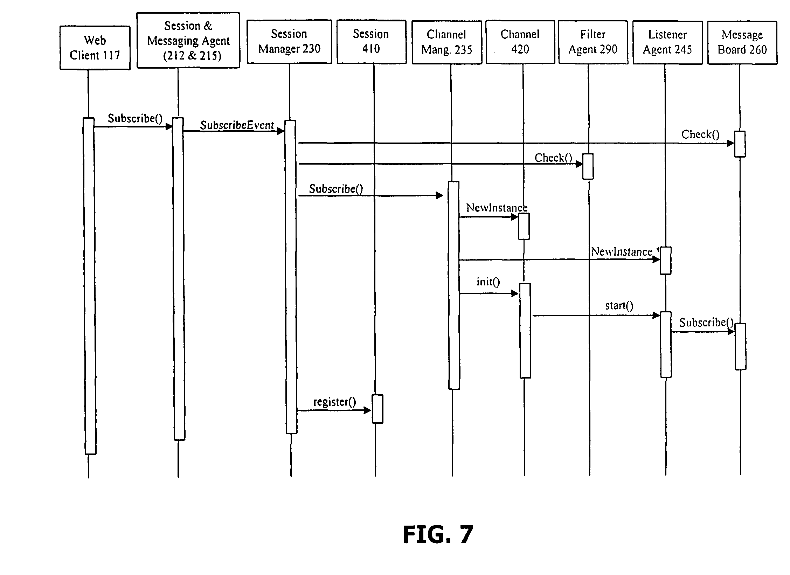

Fig. 7 describes exemplary schematics of a process, in which a web client subscribes for an event with the RMF server 160. In Fig. 7, the web client 117 informs the session agent 212 in the RMF web client 120 to subscribe an event. The session manager 212 issues corresponding command SubscribeEvent and the messaging agent 215 encodes the SubscribeEvent command as HTTP POST message and sends it out to the session manager 230 in the RMF server 160. The subscription request may specify a target slot and the event associated with the slot.

When the session manager 230 receives the SubscribeEvent request, it examines the specified target slot in the message board 260 and contacts the filter agent 290 in the event producer to check the access rights. The session manager 230 also contacts the channel manager 235 to select one channel 420 to be dedicated to the underlying session of the request. The channel manager 235 may then initialize the dedicated channel and links the channel to an appropriate listener agent 245. The listener agent 245 monitors the subscribed event from its associated slot in the message board 260.

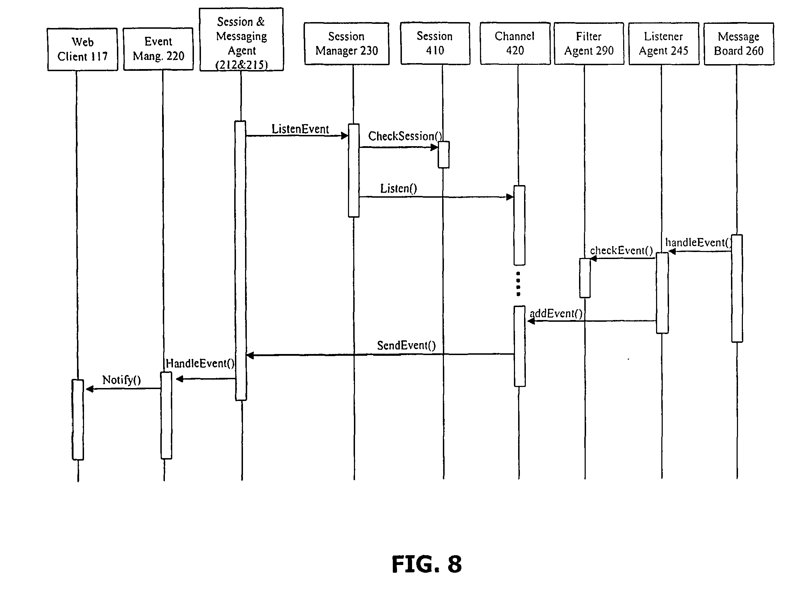

Fig. 8 describes exemplary schematics of a process, in which a web client requests the RMF server 160 to listen to a subscribed event. In Fig. 8, the session manager 212 issues command ListenEvent and the messaging agent 215 encodes the ListenEvent command as HTTP POST and sends it out to the session manager 230 in the RMF server 160. The listen event request may specify the underlying session so that a channel dedicated to the session may be identified.

When the session manager 230 receives the ListenEvent request, it may verify the session and contact the channel that is dedicated to the session. The session manager 230 instructs the channel to start to listen. When there is any instance of the event added by the corresponding listener agent 245, the channel 420 sends the event, as a response, to the session agent 212 on the RMF web client side. When the session agent 212 receives the response, it parses the response and sends the event to the event manager 220. The event manager 220 identifies the appropriate web client 117 and then dispatches a notification to the web client.

In Fig. 8, whenever there is a relevant activity performed by the event producer 180 on the specified slot, the message board 260 generates an appropriate event and notifies the appropriate listener agent 245. If needed, the listener agent 245 invokes the filter agent 290, located in the event producer 180, to carry out required filtering operation on the event. The listener agent 245 then adds the event to the appropriate channel 420.

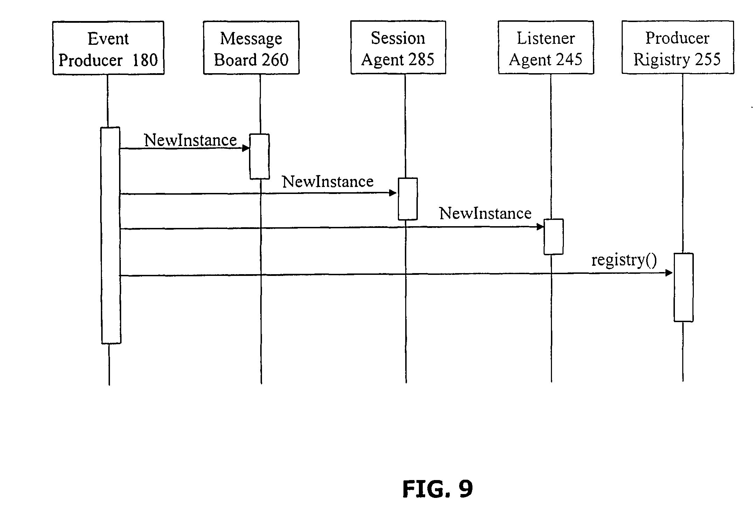

Fig. 9 describes exemplary schematics of a process, in which an event producer connects itself to the RMF server 160. The event producer (e.g., 180) first registers with the message board 260. This may lead to the creation of a new slot in the message board. The event producer 180 may also register a session agent with the RMF server 160. The registered session agent may be used to perform authentication on the web clients that intend to subscribe an event associated with the event producer. In addition, as part of registeration, the event producer may also register a listener agent with the RMF server 160 and the listener agent may be associated with the slot that is registered under the event producer.

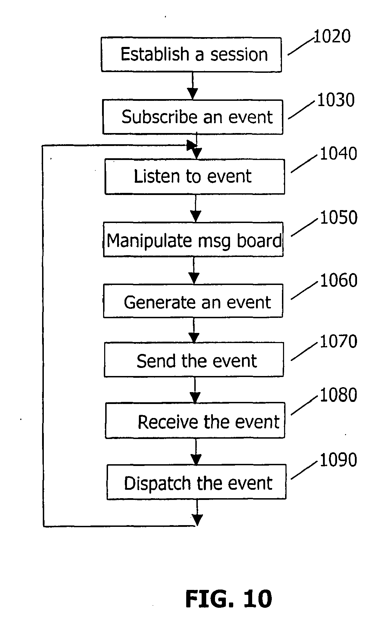

Fig. 10 to Fig. 13 describe exemplary flowcharts of different processes in web-enabled 2-way remote messaging communication in accordance with the present invention. The acts described and the order of the acts presented are merely illustrative rather than restrictive.

Fig. 10 is an exemplary flowchart of a web-enabled 2-way messaging communication that is consistent with the present invention. A remote messaging session is first established at act 1020 based on a web client's request, made through the RMF web client. During the session, the web client subscribes, also through the RMF web client, at act 1030, an event with the RMF server. Based on the subscription, the RMF server listens, at act 1040, the event. If there is any data manipulation on the message board, performed at act 1050, that satisfies the subscribed event, the RMF server 160 generates, at act 1060, an event and sends the observed event (according to the subscription) to the corresponding RMF web client at act 1070. Upon receiving the event at act 1080, the RMF web client dispatches, at act 1090, the event to the web client.

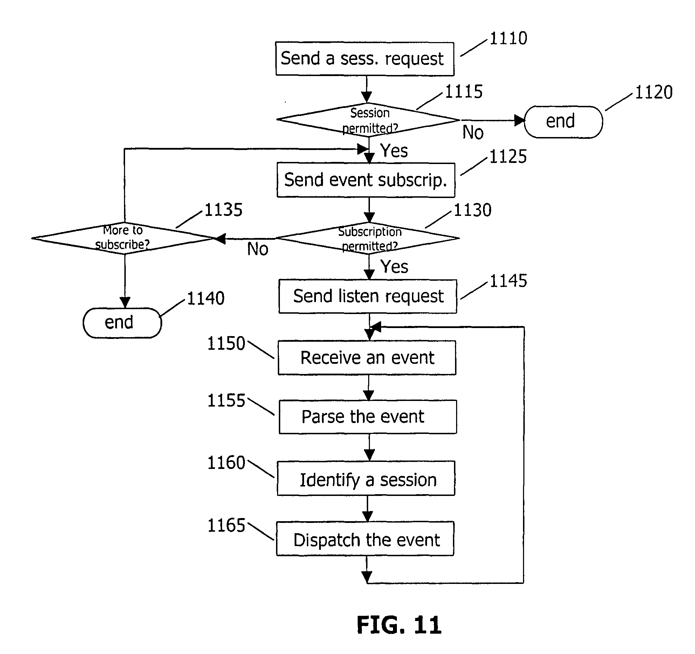

Fig. 11 is an exemplary flowchart of an RMF web client that facilitates a web client in web-enabled 2-way messaging communication. The RMF web client first sends an begin session request, at act 1110, to establish a remote messaging session between a corresponding web client and a specified event producer through the RMF server. If the request for establishing such a session is denied, determined at act 1115, the process is ended at act 1120. There may be different reasons for the RMF server to deny a session request from a web client. For example, the authentication performed on the web client may fail. Another example is that the web client's access right may be limited.

If the session is established (determined at act 1115), the RMF web client sends a subscription request, at act 1125, to subscribe for an event with the RMF server. An subscription request may also be denied which is examined at act 1130. If a subscription is denied and the web client may attempt to subscribe other event, the process returns to act 1125. If there is no more events to be subscribed, determined at act 1135, the process ends at act 1140.

When an event is successfully subscribed, the web client sends a listen request, at act 1145, the RMF server to listen to the event. This initiates a listening connection between the RMF web client and the RMF server. Through the listening connection, the subscribed event is continuously monitored at the server side. A subscription may be placed with respect to a certain operation performed on a particular slot in the message board. The operation may be directly related to the slot (e.g., delete the slot) or may be related to the data stored in the slot (e.g., insert data into the slot or delete the data in the slot). A subscribed event occurs whenever the specified operation is actually performed on the particular slot.

On the client side, once the listening connection is established, the RMF web client waits to receive the subscribed event. The web client receives an event at act 1150. The event may be sent encoded which is parsed at act 1155. Each event may be sent with a unique identification associated with a particular session of a particular web client. Such identification is recognized at act 1160. The event is dispatched, at act 1165, to the web client according to the identification.

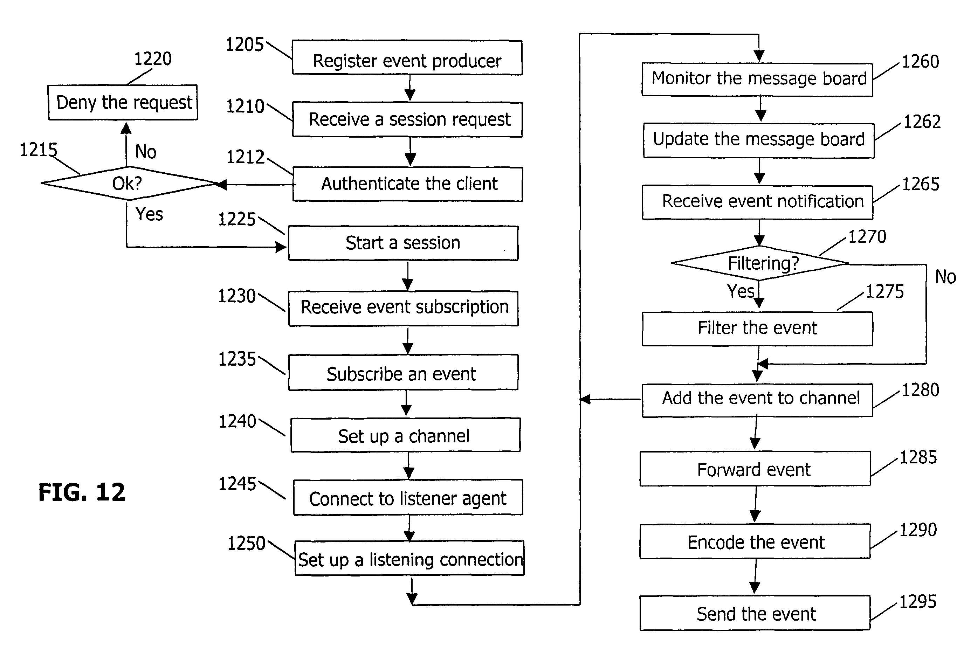

Fig. 12 is an exemplary flowchart of a process, in which an RMF server interacts with an RMF web client and event producers to facilitate a web-enabled 2-way messaging communication. In Fig. 12, an event producer first registers itself, at act 1205, with the RMF server 160. The registered information may be stored in the producer registry 255 (Fig. 4). The RMF server receives, at act 1210, a request to establish a remote messaging session from a web client (via a corresponding RMF web client). The request may indicate an event producer with which the requested session is established.

Based on the request, the RMF server 160 authenticates the web client at act 1212. Such authentication may examine the access rights of the web client. If the authentication fails, examined at act 1215, the RMF server 160 denies the request at act 1220. If the authentication passes, determined at act 1215, the RMF server 160 starts, at act 1225, a remote messaging session for the requesting web client.

During a remote messaging session, a web client may subscribe for an event with the RMF server 160. When a web client sends a subscription request, the RMF server 160 receives the request at act 1230. Based on the request, the RMF server 160 execute the subscription at act 1235. In addition, the RMF server 160 sets up a channel at act 1240 to designate to the web client and connects the channel to a listener agent at act 1245. The choice of the listener agent is based on the subscription. For example, the selected listener agent is assigned to the slot that the subscribed event is associated with.

To listen to the subscribed event, the RMF server 160 sets up, at act 1250, a listening connection. The listening connection may be established automatically when the event is successfully subscribed. It may also be established based on an explicit request from the web client to establish a listening connection. The latter is possible because the web client may temporarily disconnect the listening connection and later revive the connection.

Since an event subscription may be associated with certain operation performed on certain slot in the message board, the RMF server 160 listens to the event by monitoring the operations, at act 1260, performed on various slots in the message board. If the operation associated with the subscribed event occurs at act 1262, message board 260 may send out a notification of the event to an appropriate listener agent. The listener agent associated with the subscriber event receives, at act 1265, the event notification.

Before sending the event to the web client that subscribes the event, the RMF server determines, at act 1270, whether there is any filtering operation to be performed on the event. If there is, a filter agent is invoked at act 1275. Such a filter agent may correspond to a based filter agent 250, located in the RMF server 160, or a filter agent 290 located in the underlying event producer (Fig. 4). The event is then added, at act 1280, to the channel dedicated to the web client.

The channel manager 235, once the notification is added to the channel dedicated to the web client, forwards the notification, at act 1285, to the web server 155 so that the notification is to be encoded, at act 1290, using a web protocol and then sent, at act 1295, to the web client.

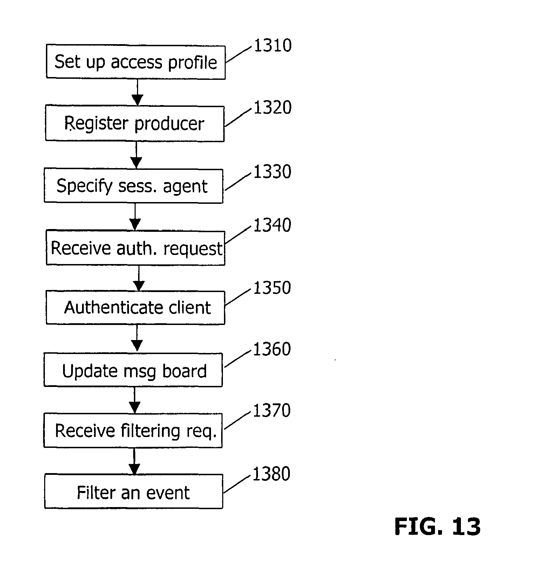

Fig. 13 is an exemplary flowchart of a process, in which an event producer conducts a 2-way remote messaging communication with a web client by interfacing with the RMF server. The event producer first sets up, at act 1310, part of the access control profile relevant to the event producer. It may then registers itself with the RMF server 160 at act 1320. The event producer may also specify a session agent, at act 1330, that performs authentication on web clients for the event producer.

When a web client requests to establish a session with the event producer, the request may be processed first by the RMF server 160 and authentication may be performed prior to starting a requested session. The RMF server 160 may invoke the session agent in the event producer to execute the authentication. The event producer receives the authentication request from the RMF server at act 1340 and performs the authentication on the requesting web client at act 1350.

The event producer manipulates the message board, at act 1360, in the RMF server 160 through the RMF server API 265 (Fig. 2). If such manipulation fits the specification of a subscribed event, an event is generated in the RMF server 160 and may be filtered using the filter agent in the event producer. In this case, the RMF server 160 sends a request to the event producer for filtering an event. The event producer receives the filtering request at act 1370 and filters the event at act 1380.

While the invention has been described with reference to the certain illustrated embodiments, the words that have been used herein are words of description, rather than words of limitation. Changes may be made, within the purview of the appended claims, without departing from the scope and spirit of the invention in its aspects. Although the invention has been described herein with reference to particular structures, acts, and materials, the invention is not to be limited to the particulars disclosed, but rather extends to all equivalent structures, acts, and, materials, such as are within the scope of the appended claims.

### APPENDIX A: RMF CLIENT API

### Class Session

```
 {
       public static Session connect(URL url, String provider,
                     String username, String passwd);
       public void disconnect();
       public boolean check();
       public boolean subscribe(String slotName, int eventMask,
                     EventListener listener);
      public void unsubscribe(String slotName, EventListener listener);
      public DataItem query(String slotName, String item);
      public DataItem post(String slotName, String message, Vector
 args);
      public boolean postAsync(String slotName, String message, Vector
 args, ResponseListener response);
      public String getProvider();
      public void setDisppatchMode(short mode);
      public void setSessionListener(SessionListener listener);
 }
 Interface SessionListener {
  public void sessionAborted():
 }
 Interface RemoteEventListener
 {
  public void handleEvent(ServerEvent event);
 }
 Interface ResponseListener
 {
  public void handleResponse(DataItem result);
 }
 Class RemoteEvent
 {
  public static short ALL_MASK = 0x0177;
  public static short SLOT_MASK = 0x0007;
  public static short SLOT_CREATED = 0x001;
  public static short SLOT_DELETED = 0x002;
  public static short SLOT_CLEARED = 0x004;
  public static short DATA_MASK = 0x0070;
  public static short DATA_POSTED = 0x010;
  public static short DATA_CHANGED = 0x020;
  public static short DATA_DELETED = 0x040;
  public static short PROV_MASK = 0x0100;
  public static short PROV_REMOVED = 0x0100;
  public int getEventType():
  public String getSlotName();
  public DataItem getDataItem():
  public String getProducer();
  public Date getTimeStamp();
 }
 Class DataItem {
  public String getName();
  public Object getValue();
  public String getType();
  public String getDescription();
 }
```

### Appendix B: RMF Server API

### Interface RMFRegistry {

```
  public boolean registerProvider(MessageBoard);
  public boolean registerProvider(MessageBoard, SessionAgent agent);
   public MessageBoard getProvider(String name);
   public boolean removeProvider (String name);
   public Boolean installSessionAgent(String provider, SessionAgent
 agent);
   public SessionAgent getSessionAgent (String provider);
   public Boolean removeSessionAgent (String provider);
   public boolean installFilterAgent(String prov, String slot,
 FilterAgent filter);
   public FilterAgent getFilterAgent(String prov, String slot);
   public void removeFilterAgent(String prov, String slot);
 }
 Interface SessionAgent {
   public boolean authenticate(String provider, String u, String p);
   public void sessionEstablished(String sessionid,
              String provider, String username);
  public void sessionClosed(String sessionid, String provider,
              String username);
 }
 Interface FilterAgent {
  public boolean checkSlotAccess(String user, String slotName);
  public boolean checkEventAccess(String user, String slotName, ICCEvent
 evt);
  public boolean checkMessageAccess(String user, String slotName, String
 messageName);
 }
```

### APPENDIX C. MESSAGEBOARD API

This section lists the interfaces and classes defined by MessageBoard package

### class MessageBoard

```
 public class MessageBoard
 {
  public static final int SIMPLE_SLOT = 1
  public static final int TABLE_SLOT = 2
  public static final int ARRAY_SLOT = 3
  public static final int LIST_SLOT = 4
  public static final int QUEUE_SLOT = 5
  public static final int STACK_SLOT = 6
  public MessageBoard(String name, String masterKey);
  public Enumeration getSlotNames()
  public void clearAll(String key)
  public boolean contains(String slotName)
  public Slot createSlot(String slotName, int slotType)
  public Slot getSlot(String slotName)
  public void deleteSlot(String slotName)
  public void clearSlot(String slotName)
  public void subscribe(String slotName, short eventName,
                     ICCEventListener listener)
  public void unsubscribe(String slotName, short eventName,
                     ICCEventListener listener)
 }
```

### class Slot

```
 public abstract class Slot
 {
  public static short NO_NOTIFICATION = 1;
  public static short ASYNCRONOUS_NOTIFICATION = 2;
  public static short SYNCRONOUS_NOTIFICATION = 3;
  protected Slot(String name, int typeCode)
  protected Slot(String name, int typeCode, String accessCode)
  public String getName()
  public String getTypeCode()
  public boolean isPrivate()
  public abstract boolean isEmpty()
  public boolean match(String code)
  public String getEventMode()
  public void setEventModee(int nType)
  public void subscribe(String eventName, ICCEventListener listener)
  public void unsubscribe(String eventName)
  public void addMessageHandler(MessageHandler handler)
  public void removeMessageHandler(String messageName)
  public DataItem post(String messageName, Vector argus)
  public boolean postAsync(String messageName, Vector argus, ResponseListener
 listener)
  protected void notify()
  protected abstract void clear()
 }
```

### class SimpleSlot

```
 public class SimpleSlot extends Slot
 {
  public SimpleSlot(String name)
  public SimpleSlot(String name, String accessCode)
  public DataItem get()
  public void put(DataItem data)
  public boolean isEmpty()
  public void clear()
 }
```

### class TableSlot

```
 public class TableSlot extends Slot
 {
  public TableSlot(String name)
  public TableSlot (String name, String accessCode)
  public DataItem get(String itemName)
  public void put(DataItem data)
  public void remove(String itemName)
  public boolean contains(String itemName)
  public void clear()
  public boolean isEmpty()
  public int size()
 }
```

### class QueueSlot

```
 public class QueueSlot extends Slot
 {
  public QueueSlot(String name)
  public DataItem get()
  public void put(DataItem data)
  public void remove(Object o)
  public void contains(Object o)
  public void clear()
  public boolean isEmpty()
  public void setLimit(int max)
  public int size()
 }
```

### class Dataltem

```
 public class DataItem
 {
  public DataItem(String name, Object o)
  public String getName()
  public Object getData()
  public Object setData(Object o)
  public Class getDataType()
  public String getDataTypeName()
  public String getProducer()
  public void setProducer(String src)
  public long getTimeStamp()
 }
```

### interface ICCEventListener

```
 public interface ICCEventListener
 {
  void handleEvent(ICCEvent)
 }
```

### interface MessageHandler

```
 public interface MessageHandler
 {
  String getName()
  DataItem invoke(Vector args)
 }
```

### class ICCEvent

```
 public abstract classes ICCEvent
 {
  public static short SLOT_EVENT = 0;
  public static short DATA_EVENT = 1;
  public static short SLOT_CREATED = 10;
  public static short SLOT_DELETED = 11;
  public static short SLOT_CLEARED = 12;
  public static short DATA_POSTED = 101;
 public static short DATA_CHANGED = 102;
  public static short DATA_DELETED = 103;
 protected ICCEvent(short t, short n, String s)
 public int getEventType()
 public String getEventName()
 public String getSlotName()
 }
```

### class SlotEvent

```
 public class SlotEvent extends ICCEvent
 {
  public SlotEvent(short eventName, String slotName)
 }
```

### class DataEvent

```
 public class DataEvent extends ICCEvent
 {
  public DataEvent(short eventName, String slotName, String oldName,
                     DataItem newItem)
  public String getOldItemName()
  public DataItem getNewItem()
 }
```

### class ArraySlot

```
 public class ArraySlot extends Slot
 {
  public ArraySlot(String name)
  public DataItem get(int index)
  public void put(int index, DataItem data)
  public void remove(int index)
  public boolean contains(Object o)
  public int getIndex(Object o)
  public void clear()
  public boolean isEmpty()
  public int size()
 }
```

### class ListSlot

```
 public class ListSlot extends Slot
 {
  public ListSlot(String name)
  public DataItem get(int index)
  public void put(DataItem data)
  public void insert(int index, DataItem data)
  public void replace(int index, DataItem data)
  public void remove(int index)
  public boolean contains(Object o)
  public void clear()
  public boolean isEmpty()
  public int size ()
  public ListIterator iterate(int index)
 }
```

### class ListIterator

```
 public class ListIterator
 {
       public SetIterator(SetSlot s)
       public boolean hasNext()
       public DataItem getNext()
 }
```

### class StackSlot

```
 public class StackSlot extends Slot
 {
  public StackSlot(String name)
  public DataItem get()
  public void put(DataItem data)
  public void remove(Object o)
  public void contains(Object o)
  public void clear()
  public boolean isEmpty()
  public int size()
 }
```

## Claims

1. A remote messaging facility server (160), comprising:
a session manager (230) for managing a remote messaging session established with a web client (117) via a remote messaging facility client (120), said web client (117) issuing requests and receiving responses during the remote messaging session via the remote messaging facility client (120); and
a message board (260) comprising a plurality of slots for storing data, said data being manipulated by at least one event producer (180), manipulations of the data in said message board (260) triggering different events,
**characterized in that** said session manager (230) is arranged to maintain a persistent listening connection between the remote messaging facility server (160) and an event producer (180) associated with an event subscribed by a web client (117) and by further comprising:
a channel manager (235) for managing zero or more channels designed for subscriptions of events, said managing associating each subscription with a channel to store the occurrences of the subscribed event and dispatching each stored event to the remote messaging facility client (120) that represents the web client (117) that subscribes the stored event.

2. The server according to claim 1, further comprising:
a message parser (240) for parsing a request issued by a web client (117) via a remote messaging facility client (120) prior to generating a response for the request; and
a plurality of listener agents (245), each of which corresponding to a different slot in the message board and connecting to at least one channel that store subscribed event related to the slot, each listener agent (245) listening to the subscribed event occurred in the slot and sending the subscribed event to a corresponding channel.

3. The server according to claim 2, further comprising:
a producer registry (255) for registering the at least one event producer;
an access control profile (270) for recording access control information used by said session manager (230) in managing a remote messaging session for a web client (117); and
a base filter agent (250), connecting to the listener agents (245), for filtering a subscribed event prior to sending the subscribed event to a corresponding channel.

4. The server according to claim 3, further comprising:
a remote messaging facility server application programming interface (265), through which the at least one event producer (180) communicates with the remote messaging facility server (160) to register, to manipulate the message board (260), and to communicate with the web client (117).

5. A method for web-enabled 2-way remote messaging, comprising:
establishing a remote messaging session between a web client (117;132) and an event provider (180;190) via a remote messaging facility client (120;135), connecting to the web client (117;132), and a remote messaging facility server (160), connecting to the event producer (180;190), the web client (117;132) issuing requests and receiving responses during the remote messaging session; and
subscribing, by the web client (117;132) via the remote messaging facility client (120;135), to an event that is related to an action performed by the event producer (180;190) on a slot of a message board (260) located in the remote messaging facility server (160),
**characterized by** further comprising:
maintain a persistent listening connection between the remote messaging facility server (160) and an event producer (180) associated with an event subscribed by a web client (117);
managing zero or more channels designed for subscriptions of events, said managing associating each subscription with a channel to store the occurrences of the subscribed event; and
dispatching each stored event to the remote messaging facility client (120) that represents the web client (117) that subscribes the stored event.

6. The method according to claim 5, wherein managing zero or more channels designed for subscriptions of events comprises:
listening, by a listener agent (245) in the remote messaging facility server (160), to a channel, dedicated to the web client (117;132), the listener agent (245) receiving a notification upon the occurrence of a subscribed event; and
dispatching the notification from the remote messaging facility server (160) to the web client (117;132) via a web server (155) and the remote messaging facility client (120;135), said notification being encoded by the web server (155) using a web protocol to generate a response,

7. The method according to claim 6, wherein said requests includes at least one of:
a begin session request to start a remote messaging session;
an end session request to finish a remote messaging session;
a check session request to examine the status of a remote messaging session;
a subscribe event request to subscribe an event with the remote messaging facility server;
an unsubscribe event request to end a subscription of an event with the remote messaging facility server;
a query data request to inquiry a data item in the message board;
an listen event request to start a listening connection; and
a post message request to post a message from the web client to a message handler associated with a slot in the message board.

8. The method according to claim 7, wherein said requests are encoded using a web protocol.

9. The method according to claim 8, wherein said responses are encoded by said web server (155) using a web protocol.

10. The method according to claim 9, wherein
said web protocol used to encode the requests includes HyperText Transport Protocol; and
said web protocol used by said web server (155) to encode the responses includes HyperText Transport Protocol.

11. The method according to any of claims 5-10, wherein said establishing comprises:
sending a begin session request, by the web client (117;132)via the remote messaging facility client (120;135) and the web server (155), to the remote messaging facility server (160) to establish the remote messaging session;
authenticating the web client with respect to the event producer to generate a decision of either positive or negative; and
starting, by a session manager (230) in the remote messaging facility server (160), the remote messaging session if the decision is positive.

12. The method according to any of claims 5-11, wherein said subscribing comprises:
sending a subscribe event request to the session manager (230) to subscribe the event, the subscribe event request specifying the slot and the action;
setting up, by the session manager (230), a channel to store the occurrences of the event; and
connecting the channel with the listener agent (245) associated with the slot of the message board (260).

13. The method according to any of claims 5-12, wherein said listening comprises:
sending a listen event request to the remote messaging facility server (160);
setting up a listening connection, for the event subscribed in said subscribing, said listening connection associating with the channel dedicated to the web client (117;132);
monitoring, by the listener agent (245) connecting to both the channel and the slot, the action performed by the event producer (180;190) on the slot that triggers the event;
receiving the notification corresponding to the subscribed event when the action is performed by said event producer (180;190); and
adding, by the listener agent (245), the notification to the channel.

14. The method according to claim 13, further comprising filtering the notification prior to adding the notification to the channel.

15. The method according to any of claims 5-14, wherein said dispatching comprises:
forwarding, by a channel manager (235) that manages the channel, the notification to the web server (155) ;
encoding, by the web server (155), the notification using the web protocol to generate the response; and
sending the response to the web client (117;132) via the remote messaging facility client (120;135).

16. A data medium having stored thereon computer product code adapted to perform all the steps of any one of claims 5 to 15 when said program code is run on a computer.

## Patentansprüche

1. Server (160) für eine Fernnachrichtenübertragungseinrichtung, mit:
einem Sitzungsmanager (230) zum Verwalten einer Fernnachrichtenübertragungssitzung, die über einen Fernnachrichtenübertragungseinrichtungs-Client (120) mit einem Web-Client (117) aufgebaut ist, wobei der Web-Client (117) über den Fernnachrichtenübertragungseinrichtungs-Client (120) während der Fernnachrichtenübertragungssitzung Anfragen aussendet und Antworten empfängt; und
einer Nachrichtenplatte (260) mit mehreren Slots zum Speichern von Daten, die durch wenigstens einen Ereigniserzeuger (180) bearbeitet werden, wobei die Bearbeitungen der Daten in der Nachrichtenplatte (260) verschiedene Ereignisse auslösen,
**dadurch gekennzeichnet, dass** der Sitzungsmanager (230) dazu ausgelegt ist, eine fortdauernde Empfangsverbindung zwischen dem Fernnachrichtenübermittlungseinrichtungs-Server (160) und einem Ereigniserzeuger (180) aufrechtzuerhalten, der einem Ereignis zugeordnet ist, für das ein Web-Client (117) subskribiert hat, und ferner **gekennzeichnet durch**:
einen Kanalmanager (235) zum Verwalten von null oder mehreren Kanälen, die zur Subskription für Ereignisse ausgelegt sind, wobei die Verwaltung jede Subskription einem Kanal zuordnet, um die Auftritte der subskribierten Ereignisse zu speichern, und jedes gespeicherte Ereignis zu dem Fernnachrichtenübertragungseinrichtungs-Client (120) abschickt, der den Web-Client (117) darstellt, der für das gespeicherte Ereignis subskribiert hat.

2. Server nach Anspruch 1, ferner mit:
einem Nachrichten-Parser (240) zum Parsen einer Anfrage, die durch einen Web-Client (117) über einen Fernnachrichtenübertragungseinrichtungs-Client (120) ausgegeben wurde, bevor eine Antwort für die Anfrage erzeugt wird; und
mehreren Empfangsagenten (245), die jeweils zu verschiedenen Slots in der Nachrichtenplatte gehören und wenigstens mit einem Kanal verbunden sind, der subskribierte Ereignisse bezüglich des Slots speichert, wobei jeder Empfangsagent (245) das in dem Slot auftretende subskribierte Ereignis empfängt und das subskribierte Ereignis zu einem zugehörigen Kanal sendet.

3. Server nach Anspruch 2, ferner mit:
einem Erzeugerregister (255) zum Registrieren des wenigstens einen Ereigniserzeugers;
einem Zugriffssteuerprofil (270) zum Aufzeichnen von Zugriffssteuerinformation, die von dem Sitzungsmanager (230) beim Verwalten einer Fernnachrichtenübertragungssitzung für einen Web-Client (117) verwendet wird; und
einem Basisfilteragenten (250), der mit den Empfangsagenten (245) in Verbindung tritt, um ein subskribiertes Ereignis vor dem Aussenden des subskribierten Ereignisses an einen zugehörigen Kanal zu filtern.

4. Server nach Anspruch 3, ferner mit:
einem Anwendungsprogrammierungs-Interface (265) für den Fernnachrichtenübertragungseinrichtungs-Server, durch das der wenigstens eine Ereigniserzeuger (180) mit dem Fernnachrichtenübertragungseinrichtungs-Server (160) kommuniziert, um zu registrieren, die Nachrichtenplatte (260) zu manipulieren und mit dem Web-Client (117) zu kommunizieren.

5. Verfahren für eine Web-basierte Zweiwege-Fernnachrichtenübertragung, das aufweist:
Aufbauen einer Fernnachrichtenübertragungssitzung zwischen einem Web-Client (117; 132) und einem Ereigniserzeuger (180; 190) über einen Fernnachrichtenübertragungseinrichtungs-Client (120; 135), der mit dem Web-Client (117; 132) verbunden ist, und einen Fernnachrichtenübertragungseinrichtungs-Server (160), der mit dem Ereigniserzeuger (180; 190) verbunden ist, wobei der Web-Client (117; 132) während der Fernnachrichtenübertragungssitzung Anfragen aussendet und Antworten empfängt; und
Subskribieren für ein Ereignis durch den Web-Client (117; 132) über den Fernnachrichtenübertragungseinrichtungs-Client (120; 135), das sich auf eine Aktion bezieht, die durch den Ereigniserzeuger (180; 190) auf einem Slot einer in dem Fernnachrichtenübertragungseinrichtungs-Server (160) angeordnete Nachrichtenplatte (260) durchgeführt wird,
**gekennzeichnet durch**:
Aufrechterhalten einer fortdauernde Empfangsverbindung zwischen dem Fernnachrichtenübermittlungseinrichtungs-Server (160) und einem Ereigniserzeuger (180), der einem Ereignis zugeordnet ist, für das ein Web-Client (117) subskribiert hat;
Verwalten von null oder mehreren Kanälen, die zur Subskription für Ereignisse ausgelegt sind, wobei das Verwalten jede Subskription einem Kanal zuordnet, um die Auftritte der subskribierten Ereignisse zu speichern; und
Abschicken jedes gespeicherten Ereignisses zu dem Fernnachrichtenübertragungseinrichtungs-Client (120), der den Web-Client (117) darstellt, der für das gespeicherte Ereignis subskribiert hat.

6. Verfahren nach Anspruch 5, wobei das Verwalten von null oder mehreren Kanälen, die für Subskriptionen von Ereignissen ausgelegt sind, aufweist:
Empfangen von einem dem Web-Client (117; 132) zugehörigen Kanal durch einen Empfangsagenten in dem Fernnachrichtenübertragungseinrichtungs-Server (160), wobei der Empfangsagent (245) bei Auftreten eines subskribierten Ereignisses eine Mitteilung erhält; und
Aussenden der Notifikation von dem Fernnachrichtenübertragungseinrichtungs-Server (160) zu dem Web-Client (117; 132) über einen Web-Server (155) und den Fernnachrichtenübertragungseinrichtungs-Client (120; 135), wobei die Mitteilung durch den Web-Server (155) unter Verwendung eines Web-Protokolls verschlüsselt wird, um eine Antwort zu erzeugen.

7. Verfahren nach Anspruch 6, wobei die Anfragen wenigstens eine der folgenden Anfragen aufweisen:
eine Sitzungsbeginnanfrage zum Starten einer Fernnachrichtenübertragungssitzung;
eine Sitzungsbeendigungsanfrage zum Beenden einer Fernnachrichtenübertragungssitzung;
eine Sitzungsprüfanfrage zum Überprüfen des Status einer Fernnachrichtenübertragungssitzung;
eine Ereignissubskriptionsanfrage zum Subskribieren eines Ereignisses mit dem Fernnachrichtenübertragungseinrichtungs-Server;
eine Ereignisentsubskriptionsanfrage zum Beendigen einer Subskription für ein Ereignis mit dem Fernnachrichtenübertragungseinrichtungs-Server;
eine Datensuchanfrage zum Suchen einer Dateneinheit in der Nachrichtenplatte;
eine Ereignisempfangsanfrage zum Starten einer Empfangsverbindung; und
eine Nachrichtenversendeanfrage zum Versenden einer Nachricht von dem Web-Client zu einer Nachrichtenhandhabungseinrichtung, die einem Slot in der Nachrichtenplatte zugeordnet ist.

8. Verfahren nach Anspruch 7, wobei die Anfragen unter Verwendung eines Web-Protokolls verschlüsselt sind.

9. Verfahren nach Anspruch 8, wobei die Antworten durch den Web-Server (155) unter Verwendung eines Web-Protokolls verschlüsselt sind.

10. Verfahren nach Anspruch 9, wobei
das zur Verschlüsselung der Anfragen verwendete Web-Protokoll ein Hypertext-Transportprotokoll aufweist; und
das durch den Web-Server (155) zur Verschlüsselung der Antworten verwendete Web-Protokoll ein Hypertext-Transportprotokoll aufweist.

11. Verfahren nach einem der Ansprüche 5 bis 10, wobei das Aufbauen aufweist:
Senden einer Sitzungsbeginnanfrage durch den Web-Client (117; 132) über den Fernnachrichtenübertragungseinrichtungs-Client (120; 135) und den Web-Server (155) zu dem Fernnachrichtenübertragungseinrichtungs-Server (160), um die Fernnachrichtenübertragungssitzung aufzubauen;
Authentifizieren des Web-Clients bezüglich des Ereigniserzeugers, um entweder eine positive oder eine negative Entscheidung zu erhalten; und
Starten der Fernnachrichtenübertragungssitzung durch einen Sitzungsmanager (230) in dem Fernnachrichtenübertragungseinrichtungs-Server (160), falls die Entscheidung positiv ist.

12. Verfahren nach einem der Ansprüche 5 bis 11, wobei das Subskribieren aufweist:
Senden einer Ereignissubskriptionsanfrage zu dem Sitzungsmanager (230), um für das Ereignis zu subskribieren, wobei die Ereignissubskriptionsanfrage den Slot und die Aktion spezifiziert;
Einstellen eines Kanals durch den Sitzungsmanager (230), um die Auftritte des Ereignisses zu speichern; und
Verbinden des Kanals mit dem Empfangsagenten (245), der dem Slot der Nachrichtenplatte (260) zugeordnet ist.

13. Verfahren nach einem der Ansprüche 5 bis 12, wobei das Empfangen aufweist:
Senden einer Nachrichtenempfangsanfrage zu dem Fernnachrichtenübertragungseinrichtungs-Server (160);
Einstellen einer Empfangsverbindung für das beim Subskribieren subskribierte Ereignis, wobei die Empfangsverbindung dem Kanal zugeordnet ist, der dem Web-Client (117; 132) zugehörig ist;
Überwachen der durch den Ereigniserzeuger (180; 190) durchgeführten Aktion auf dem Slot, der das Ereignis auslöst, durch den Empfangsagenten (245), der sowohl an den Kanal als auch an den Slot angeschlossen ist;
Empfangen der Mitteilung zu dem subskribierten Ereignis, wenn die Aktion durch den Ereigniserzeuger (180; 190) durchgeführt wird; und
Hinzufügen der Mitteilung zu dem Kanal durch den Empfangsagenten (245).

14. Verfahren nach Anspruch 13, wobei ferner die Mitteilung vor ihrer Hinzufügung zu dem Kanal gefiltert wird.

15. Verfahren nach einem der Ansprüche 5 bis 14, wobei das Abschicken aufweist:
Weiterleiten der Mitteilung zu dem Web-Server (155) durch einen Kanalmanager (235), der den Kanal verwaltet;
Verschlüsseln der Mitteilung unter Verwendung des Web-Protokolls durch den Web-Server (155), um die Antwort zu erzeugen; und
Senden der Antwort an den Web-Client (117; 132) über den Fernnachrichtenübertragungseinrichtungs-Client (120; 135).

16. Datenmedium, auf dem ein Computerprogrammproduktcode gespeichert ist, der bei Ablauf auf einem Computer zum Ausführen aller Schritte nach einem der Ansprüche 5 bis 15 ausgelegt ist.

## Revendications

1. Serveur (160) à fonction de messagerie à distance, comportant :
un gestionnaire (230) de session destiné à gérer une session de messagerie à distance établie avec un client web (117) en passant par un client (120) à fonction de messagerie à distance, ledit client web (117) délivrant des requêtes et recevant des réponses pendant la session de messagerie à distance en passant par le client (120) à fonction de messagerie à distance ; et
une carte de message (260) comportant de multiples créneaux pour le stockage de données, lesdites données étant manipulées par au moins un producteur (180) d'événement, des manipulations des données dans ladite carte de message (260) déclenchant différents événements,
**caractérisé en ce que** ledit gestionnaire (230) de session est agencé pour maintenir une connexion d'écoute persistante entre le serveur (160) à fonction de messagerie à distance et un producteur d'événement (180) associé à un événement souscrit par un client web (117) et **en ce qu'**il comporte en outre :
un gestionnaire (235) de canaux destiné à gérer zéro canal ou davantage de canaux conçus pour des souscriptions d'événements, ladite gestion associant chaque souscription à un canal pour stocker les occurrences de l'événement souscrit et distribuant chaque événement stocké au client (120) à fonction de messagerie à distance qui représente le client web (117) qui souscrit l'événement stocké.

2. Serveur selon la revendication 1, comportant en outre :
un analyseur (240) de message destiné à analyser une requête délivrée par un client web (117) en passant par un client à fonction de messagerie à distance (120) avant la génération d'une réponse à la requête ; et
de multiples agents auditeurs (245), dont chacun correspond à un créneau différent dans la carte de message et se connectant à au moins un canal qui stocke un événement souscrit associé au créneau, chaque agent auditeur (245) écoutant l'événement souscrit apparu dans le créneau et envoyant l'événement souscrit à un canal correspondant.

3. Serveur selon la revendication 2, comportant en outre :
un registre (255) de producteur destiné à enregistrer le, au moins un, producteur d'événement ;
un profil (270) de commande d'accès destiné à enregistrer une information de commande d'accès utilisée par ledit gestionnaire (230) de session dans la gestion d'un session de messagerie à distance pour un client web (117) ; et
un agent de filtre de base (250), se connectant aux agents auditeurs (245), pour écouter un événement souscrit avant l'envoi de l'événement souscrit à un canal correspondant.

4. Serveur selon la revendication 3, comportant en outre :
une interface (265) de programmation d'application de serveur à fonction de messagerie à distance, à travers laquelle le, au moins un, producteur d'événement (180) communique avec le serveur (160) à fonction de messagerie à distance pour un enregistrement, pour une manipulation de la carte de message (260) et pour une communication avec le client web (117).

5. Procédé pour une messagerie à distance bidirectionnelle validée par le web, comprenant :
l'établissement d'une session de messagerie à distance entre un client web (117 ; 132) et un fournisseur d'événement (180, 190) en passant par un client (120 ; 135) à fonction de messagerie à distance se connectant au client web (117 ; 132), et un serveur (160) à fonction de messagerie à distance, se connectant au producteur d'événement (180 ; 190), le client web (117 ; 132) délivrant des requêtes et recevant des réponses pendant la session de messagerie à distance ; et
la souscription, par le client web (117 ; 132) en passant par le client à fonction de messagerie à distance (120 ; 135), à un événement qui a trait à une action effectuée par le producteur d'événement (180 ; 190) sur un créneau d'une carte de message (260) placée dans le serveur (160) à fonction de messagerie à distance,
**caractérisé en ce qu'**il comprend en outre :
le maintien d'une connexion d'écoute persistante entre le serveur (160) à fonction de messagerie à distance et un producteur d'événement (180) associé à un événement souscrit par un client web (117) ;
la gestion de zéro canal ou de davantage de canaux conçus pour des souscriptions d'événements, ladite gestion associant chaque souscription à un canal pour stocker les occurrences de l'événement souscrit ; et
la distribution de chaque événement stocké au client (120) à fonction de messagerie à distance qui représente le client web (117) qui souscrit à l'événement stocké.

6. Procédé selon la revendication 5, dans lequel la gestion de zéro canal ou de davantage de canaux conçus pour des souscriptions d'événements comprend :
l'écoute, par un agent auditeur (245) dans le serveur (160) à fonction de messagerie à distance, d'un canal, dédié au client web (117 ; 132), l'agent auditeur (245) recevant une notification portant sur l'occurrence d'un événement souscrit ; et
la distribution de la notification depuis le serveur (160) à fonction de messagerie à distance au client web (117 ; 132) en passant par un serveur web (155) et le client à fonction de messagerie à distance (120 ; 135), ladite notification étant codée par le serveur web (155) en utilisant un protocole web pour générer une réponse.

7. Procédé selon la revendication 6, dans lequel lesdites requêtes comprennent au moins l'une de :
une requête de session de commencement pour lancer une session de messagerie à distance ;
une requête de session de fin pour finir une session de messagerie à distance ;
une requête de session de vérification pour examiner l'état d'une session de messagerie à distance ;
une requête d'événement de souscription pour souscrire à un événement à l'aide du serveur à fonction de messagerie à distance ;
une requête d'événement de non souscription pour mettre fin à une souscription à un événement à l'aide du serveur à fonction de messagerie à distance ;
une requête de données de demande pour demander un élément de données dans la carte de message ;
une requête d'événement d'écoute pour lancer une connexion d'écoute ; et
une requête de message à poster pour poster un message du client web à une unité de traitement de message associée à un créneau dans la carte de message.

8. Procédé selon la revendication 7, dans lequel lesdites requêtes sont codées en utilisant un protocole web.

9. Procédé selon la revendication 8, dans lequel lesdites réponses sont codées par ledit serveur web (155) utilisant un protocole web.

10. Procédé selon la revendication 9, dans lequel ledit protocole web utilisé pour coder les requêtes comprend un protocole de transport HyperText ; et
ledit protocole web utilisé par ledit serveur web (155) pour coder les réponses comprend un protocole de transport HyperText.

11. Procédé selon l'une quelconque des revendications 5 à 10, dans lequel ledit établissement comprend :
l'envoi d'une requête de session de commencement, par le client web (117 ; 132) en passant par le client à fonction de messagerie à distance (120 ; 135) et le serveur web (155), au serveur à fonction de messagerie à distance (160) pour établir la session de messagerie à distance ;
l'authentification du client web par rapport au producteur d'événement pour générer une décision positive ou négative ; et
le lancement, par un gestionnaire de session (230) dans le serveur (160) à fonction de messagerie à distance, de la session de messagerie à distance si la décision est positive.

12. Procédé selon l'une quelconque des revendications 5 à 11, dans lequel ladite souscription comprend :
l'envoi d'une requête d'événement de souscription au gestionnaire de session (230) pour souscrire à l'événement, la requête d'événement de souscription spécifiant le créneau et l'action ;
l'établissement, par le gestionnaire de session (230), d'un canal pour stocker les occurrences de l'événement ; et
la connexion du canal avec l'agent auditeur (245) associé au créneau de la carte de message (260).

13. Procédé selon l'une quelconque des revendications 5 à 12, dans lequel ladite écoute comprend :
l'envoi d'une requête d'événement d'écoute au serveur (160) à fonction de messagerie à distance ;
l'établissement d'une connexion d'écoute, pour l'événement souscrit dans ladite souscription, ladite connexion d'écoute s'associant au canal dédié au client web (117 ; 132) ;
le contrôle, par l'agent auditeur (245) se connectant à la fois au canal et au créneau, de l'action effectuée par le producteur d'événement (180 ; 190) sur le créneau qui déclenche l'événement ;
la réception de la notification correspondant à l'événement souscrit lorsque l'action est effectuée par ledit producteur d'événement (180 ; 190) ; et
l'addition, par l'agent auditeur (245), de la notification au canal.

14. Procédé selon la revendication 13, comprenant en outre le filtrage de la notification avant l'addition de la notification au canal.

15. Procédé selon l'une quelconque des revendications 5 à 14, dans lequel ladite distribution comprend :
l'envoi, par un gestionnaire (235) de canal qui gère le canal, de la notification au serveur web (155) ;
le codage, par le serveur web (155), de la notification en utilisant le protocole web pour générer la réponse ; et
l'envoi de la réponse au client web (117 ; 132) en passant par le client (120 ; 135) à fonction de messagerie à distance.

16. Support de données sur lequel est stocké un code de produit informatique conçu pour exécuter la totalité des étapes selon l'une quelconque des revendications 5 à 15 lorsque ledit code de programme est mis en oeuvre sur un ordinateur.
